# EUROPEAN PATENT APPLICATION

(11) **EP 2 693 020 A2**
(43) Date of publication of application: **05.02.2014**
(21) Application number: 13178023.1
(22) Date of filing: 25.07.2013
(51) Int. Cl.: F02C 3/30, F02C 7/141

(54) **Atomizer**

(30) Priority: 31.07.2012 JP 2012169076
(71) Applicant: Hitachi Ltd., Tokyo 100-8280 (JP)
(72) Inventor: Takahashi, Fumio, Tokyo, 100-8220 (JP); Koyama, Kazuhito, Tokyo, 100-8220 (JP); Hatamiya, Shigeo, Tokyo, 100-8220 (JP); Kusumi, Naohiro, Tokyo, 100-8220 (JP); Myoren, Chihiro, Tokyo, 100-8220 (JP); Agata, Go, Tokyo, 100-8220 (JP); Sekiai, Takaaki, Ibaraki, 319-1221 (JP)
(74) Representative: MERH-IP Matias Erny Reichl Hoffmann

(57) **Abstract**

In an atomizer constructed to cool inlet air for a gas turbine by spraying fine droplets of water into the inlet air, a spray nozzle (300) is disposed to spray the finely atomized droplets of water from an outer edge of an atomized airstream into a high-speed zone thereof, towards a central region of the airstream. The atomized airstream meets an airstream of a low-speed zone formed at a downstream side, and after the two kinds of airstreams have been mixed and unified, this mixture is supplied to an axisymmetric compressor. Devices such as a feed water pipe (310) and spray nozzle (300) are placed in the low-speed zone so as not to obstruct the airstream.

## Description

### BACKGROUND OF THE INVENTION

### 1. Field of the Invention

The present invention relates to an atomizer that cools inlet air for a gas turbine by spraying fine droplets of water into the inlet air.

### 2. Description of the Related Art

JP-2011-7190-A presents an example of arranging a plurality of spray nozzles for spray cooling of inlet air. A pressurized liquid is supplied to the spray nozzles, from which the liquid is then atomized into the inlet air. In order to achieve uniform mixing of the droplets, the spray nozzles are each located at the rear of a silencer which causes a significant turbulence.

Reduction in the droplet size increases a surface area of the droplets and facilitates evaporation. This is particularly suitable for inlet air cooling in compressor stages, for the droplets usually pass through the compressor within a short time and rapid evaporation is required. The reduction in the droplet size additionally makes it easier for the droplets to follow the airstream, and thus causes less collisions and sticking of the droplets with respect to the compressor blades. This indicates that the reduction in the droplet size, that is, atomization becomes important.

International Publication No. WO99/67519 introduces a technique relating to spray nozzles suitable for fine atomization of droplets. The technique described in International Publication No. WO99/67519 is used to spray high-temperature water from the spray nozzles of a swirling type and accelerate fine atomization of the water by means of flash evaporation. The technique in International Publication No. WO99/67519 is claimed to enable very fine droplets of several micrometers (µm) to be generated.

### SUMMARY OF THE INVENTION

After experimentation by the present inventors, it has been found as a new fact that the acceleration of fine-droplet atomization localizes the droplets. The localization of the droplets is due to the fact that when the droplets are ejected from holes of spray nozzles at a certain speed, the resistance applied from the airstream during the atomization increases and causes the droplets to start following the airstream immediately after spraying.

For this reason, even if the spray nozzles capable of changing the spray into fine droplets are located at silencer outlets, this essentially does not resolve the localization itself of the droplets due to the fine atomization.

An object of the present invention is to provide an atomizer that alleviates localization of droplets due to fine atomization.

The atomizer according to the present invention is constructed to spray finely atomized droplets of water from an outer edge of an atomized airstream into a high-speed zone thereof and cause the finely atomized droplets to reach a central region of the airstream. The atomized airstream meets air of a low-speed zone formed at a downstream side, and after the two kinds of airstreams have been mixed and unified, this mixture is supplied to an axisymmetric compressor.

Even the finely atomized droplets have their localization alleviated and their coalescence suppressed. A significant cooling effect can be obtained since the airstream of the atomized and uniformly mixed fine droplets enters the compressor.

### BRIEF DESCRIPTION OF THE DRAWINGS

Fig. 1 is an overall block diagram of an atomizer according to a first embodiment of the present invention, the atomizer being applied to a gas turbine;
Fig. 2 is an enlarged view of region X shown in Fig. 1;
Fig. 3 is an enlarged view of an atomizer according to a second embodiment of the present invention;
Fig. 4 is a projection view of spray nozzles as viewed from a silencer wake shown in Fig. 3;
Fig. 5 is an enlarged view of an atomizer according to a third embodiment of the present invention;
Fig. 6 is an external view of bar-like sound absorbers as arranged in grid form;
Fig. 7 is a diagram that shows how the atomizer according to the present embodiment atomizes droplets of water; and
Fig. 8 is an enlarged view of an atomizer according to a fourth embodiment of the present invention.

### DESCRIPTION OF THE PREFERRED EMBODIMENTS

Hereunder, embodiments of the present invention will be with reference to the accompanying drawings.

### [First Embodiment]

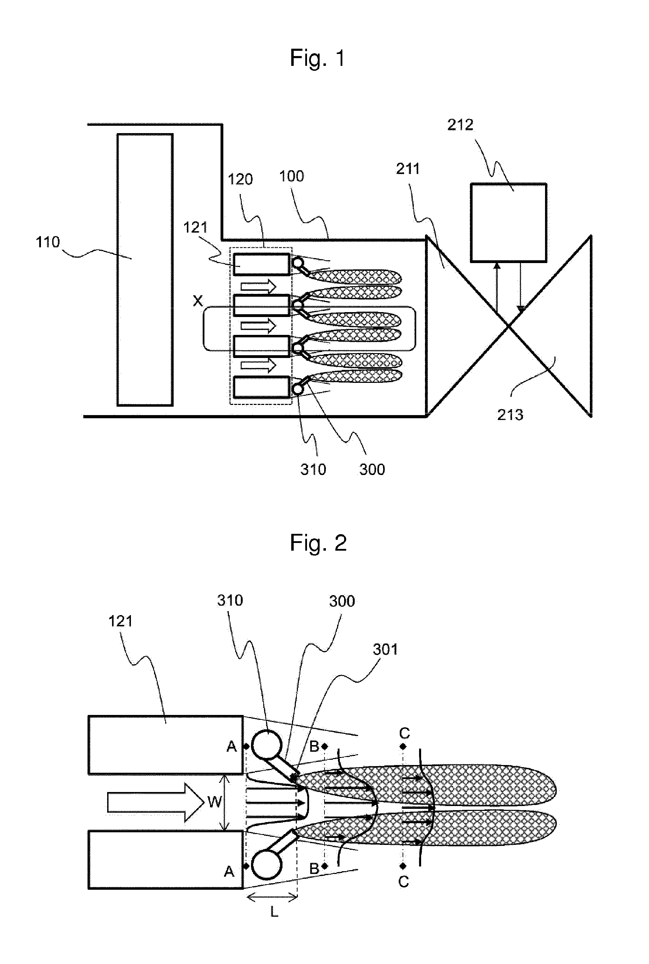

Fig. 1 is a block diagram of an atomizer according to a first embodiment of the present invention, the atomizer being applied to a gas turbine. Referring to Fig. 1, an inlet air duct is shown as 100, a filter as 110, a silencer as 120, sound absorbers as 121, a compressor as 211, a combustor as 212, a turbine as 213, spray nozzles as 300, and feed water pipes as 310.

Inlet air that has been introduced into the inlet air duct 100 is cleared of dust particles by the filter 110 and then guided to the compressor 211 via the silencer 120. The filter 110, although it is usually a HEPA filter, may be an evaporative cooler that serves as both an inlet air cooler and a wet-air filter.

At rear (an outlet) of each sound absorber 121 is placed a spray nozzle 300, from the spray nozzle of which, water is sprayed into a high-speed zone of the inlet air. As the inlet air moves away from the silencer 120, the stream of the inlet air spreads and the high-speed zone merges with an ambient atmosphere, such that the airstream approaches a mean velocity.

Fig. 2 is an enlarged view of region X shown in Fig. 1. Referring to Fig. 2, reference symbol W denotes a dimension (width) between the sound absorbers 121, and L denotes a distance from an outlet of one absorber 121 to a spray nozzle hole 301. In addition, a velocity distribution of the fluid, at position A of the outlet of the absorber 121 and positions B and C that are shown wake side of position A, is shown in Fig. 2.

Uniformity of the high-speed zone at position C-C in Fig. 2 is usually achieved at a distance that is 5 to 20 times as great as the width W between the absorbers, so a preferable distance from the outlet of the absorber 121 to the spray nozzle hole 301 is greater than the width W between the absorbers, by a factor of 1-2. That is to say, a relationship of L<2W is preferable. The feed water pipe 310 corresponding to the spray nozzle hole 301, and devices such as the spray nozzle 300 are placed in a low-speed zone (a region of a plane of projection of the absorbers 121 as viewed from a direction in which the fluid flows). This placement avoids obstructing the airstream.

In the present embodiment, the finely atomized droplets are sprayed from an outer edge of the atomized airstream into the high-speed zone thereof and caused to reach a central region of the airstream. The sprayed droplets, because of their finely atomized state, follow the airstream of the high-speed zone. The atomized airstream meets the airstream of the low-speed zone, and the two kinds of airstreams, after being mixed and unified, spread in the entire inlet air duct 100. After this, the unified mixture is supplied to the axisymmetric compressor 211. A significant evaporative-cooling effect can be obtained since the finely atomized droplets flow into the compressor 211 in a uniformly distributed condition. While the present embodiment assumes that the spray nozzle is a so-called single-fluid nozzle that atomizes a supply of high-pressure water, hot water of at least 100°C can also be supplied under pressure to a swirl nozzle, one kind of single-fluid nozzle.

### [Second Embodiment]

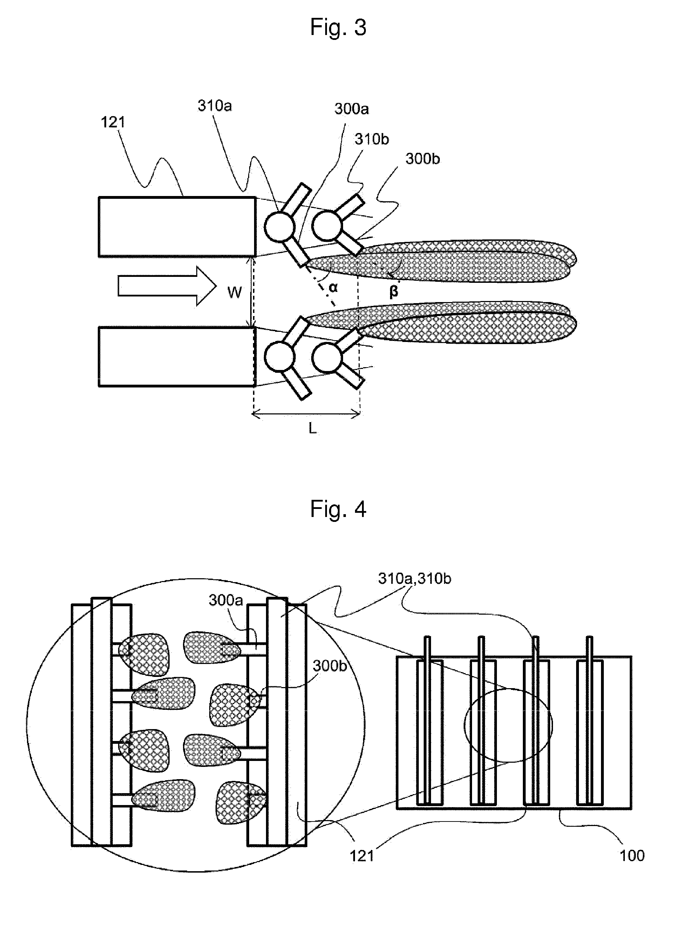

Fig. 3 shows a second embodiment of the present invention. In order of a distance from sound absorbers 121, a first spray nozzle 300a and a second spray nozzle 300b are provided in the present embodiment. Since fine atomization poses a problem of localization, a flow rate of water per spray nozzle is preferably minimized. In the present embodiment, therefore, the flow rate per spray nozzle is minimized and the water is sprayed from the first spray nozzle 300a into a central part of a high-speed zone and sprayed from the second spray nozzle 300b into a peripheral part of the high-speed zone. For this reason, the first spray nozzle 300a has a spray nozzle hole positioned in a central side of the high-speed zone relative to a spray nozzle hole of the second spray nozzle 300b, and also has a spray angle directed towards the central part. In other words, both spray nozzles are oriented so that they satisfy a condition of angle α > angle β.

Fig. 4 is a projection view of the spray nozzles as viewed from a wake of a silencer 120, with respect to the sound absorbers 121 of a plate form. In the case of the plate form, the absorbers 121 are usually arranged vertically one above the other. In this case, the first spray nozzle 300a and the second spray nozzle 300b are placed vertically at alternate positions and the water is supplied from feed water pipes 310a and 310b to the spray nozzles. Additionally, of the opposed spray nozzles belonging to the adjacent absorbers 121, the first spray nozzle is assigned a second spray nozzle attribute and the second spray nozzle is assigned a first spray nozzle attribute. This avoids overlapping between the sprays from the nozzles.

### [Third Embodiment]

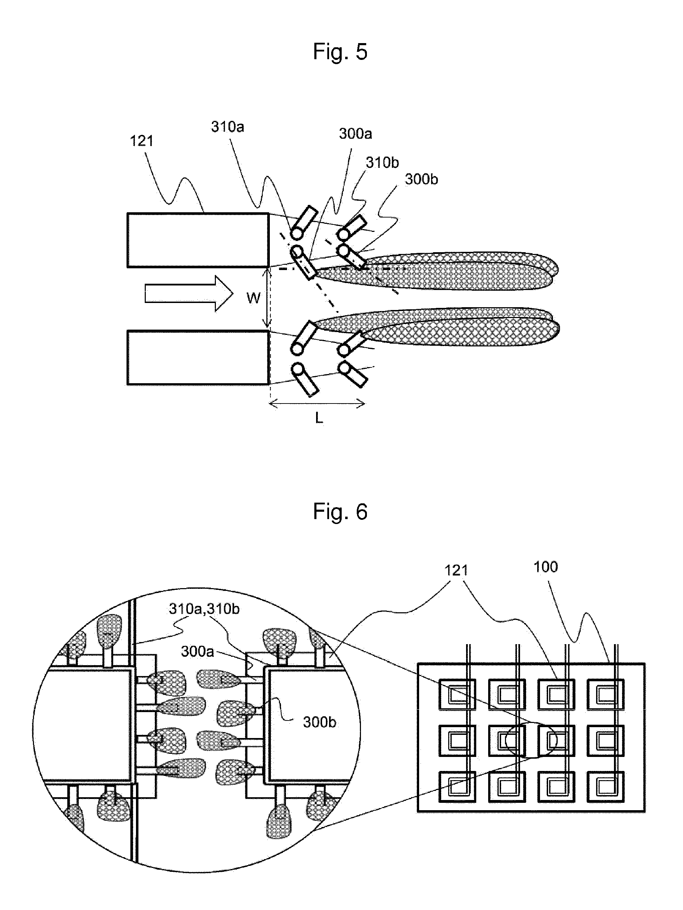

Fig. 5 shows an example in which a supply of feed water to left and right spray nozzles of sound absorbers 121 is separated. The embodiments shown in Figs. 3 and 4 have related to the spray nozzles 300a and 300b that use a common feed water pipe 310a, 310b to spray water into adjacent high-speed zones (one feed water pipe is disposed for the two spray nozzles). In the present example, however, an independent feed water pipe 310a or 310b is provided for each spray nozzle. Advantages of connecting an independent feed water pipe to each spray nozzle in this way are that when the amount of water to be sprayed is changed stepwise, to which spray nozzle the water is to be supplied can be minutely selected, and hence that uniformity of the water in an inlet air chamber 100 is maintained.

Fig. 6 shows an example of arranging bar-like sound absorbers in grid form, the figure, as with Fig. 4, being a projection view of a spray nozzle array as viewed from a wake of a silencer 120, with respect to the sound absorbers 121. First spray nozzle 300a and second spray nozzles 300b are each arranged around four sides of a sound absorber 121, and a feed water pipe 310a or 310b is connected to each of the spray nozzles. Water is supplied from the outside of an inlet air chamber 100 to each feed water pipe.

### (Principles of operation)

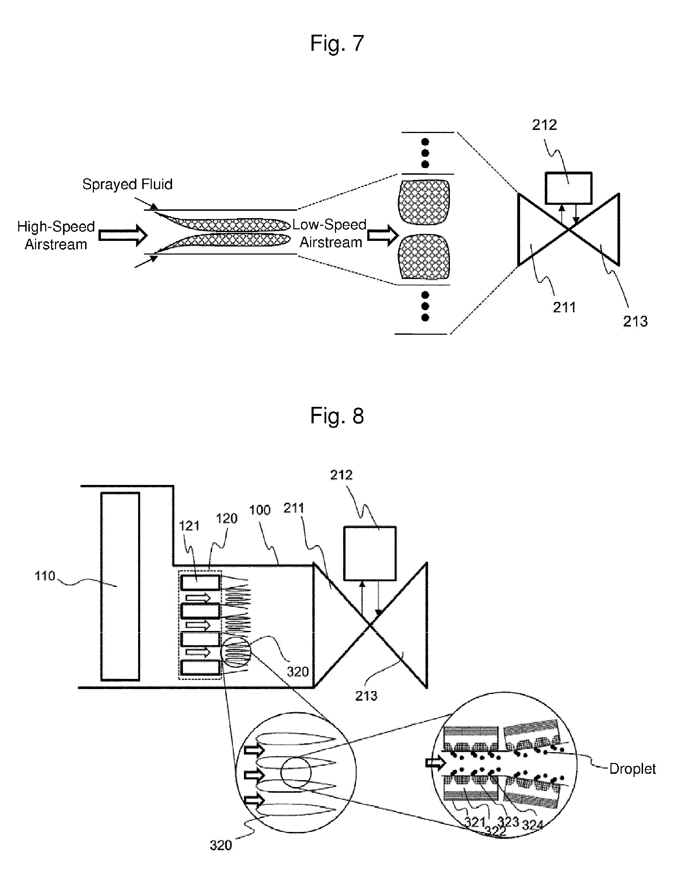

Fig. 7 is a diagram that shows how the atomizer according to any one of the above embodiments or examples atomizes droplets of water. Finely atomized droplets of water are sprayed from an outer edge of an atomized airstream into a high-speed zone thereof and cause the finely atomized droplets to reach a central region of the airstream. The atomized airstream expands transversely with respect to an airstream of a low-speed zone formed at a downstream side. After that, the two kinds of airstreams meet downstream are mixed and unified, and this mixture is supplied to an axisymmetric compressor 211. The feed water pipes 310, the spray nozzles 300, and other devices are placed in the low-speed zone so as not to obstruct the airstream. The position of the high-speed zone is not limited to the wake of the silencer.

### [Fourth Embodiment]

Fig. 8, which shows a further embodiment of the present invention, is a block diagram of an atomizer which uses ultrasonic waves to atomize droplets of water. Referring to Fig. 8, a new element 320 is an ultrasonic atomizing element. In the ultrasonic atomizing element 320, piezo-elements 321, water tanks 322, and partition walls 323 are arranged in layers, with a number of very fine holes 324 being provided on a surface of each partition wall 323. A high-frequency voltage is applied to both sides of each piezo-element 321. The ultrasonic waves that have originated from the piezo-element 321 propagate through the water in each water tank 322, and strength of the ultrasonic waves is amplified on a propagation route that diminishes in cross-sectional area, the propagation route being provided inside the partition wall. The ultrasonic waves strongly oscillates the water existing in a neighborhood of each hole 324. The atomized droplets are released from the hole, in a perpendicular direction of the elements formed in layers. An atomizing mechanism like this one is shown in a writing by J. M. Meacham, et al., entitled "Droplet formation and ejection from a micromachined ultrasonic droplet generator: Visualization and scaling", PHYSICS OF FLUIDS, 17, 100605, 2005.

The ultrasonic atomizing element 320 preferably takes a shape resembling a blade form, and reduces fluid resistance. A throat (including a neighboring region thereof) that diminishes in cross-sectional area conducts ultrasonic atomization. While Fig. 8 has shown the embodiment in which the ultrasonic atomizing element 320 is disposed in the high-speed zone of the wake of the silencer, the location of the ultrasonic atomizing element 320 is not limited to the wake of the silencer. This is due to the fact that the flow of the inlet air has been speeded up in the throat between the blades. In the present embodiment, the cross-sectional area of the flow channel across the ultrasonic atomizing element 320 of a blade form diminishes in the throat and then expands, for which reason, the droplets that have been sprayed from the throat reach the central part of the airstream and the droplets that have been sprayed from a downstream side of the throat are supplied to a peripheral part of the inlet air. This situation is substantially the same as in Fig. 3.

The ultrasonic atomization is advantageous in that it generates particles of a uniform size. The uniformity of size leads to the droplets equally following the airstream and thus decreasing in collisions. This in turn renders coalescence less prone to result, even from a large amount of water sprayed.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. An atomizer constructed to cool inlet air for a gas turbine by spraying fine droplets of water into the inlet air,
wherein a spray nozzle (300) is disposed to spray the finely atomized droplets of water from an outer edge of an atomized airstream into a high-speed zone thereof, towards a central region of the airstream.

2. The atomizer according to claim 1, wherein:
the spray nozzle (300) is placed in a low-speed zone formed at rear of a silencer sound absorber (121); and
when width of a flow channel across the silencer sound absorber (121) is taken as W and a distance from an outlet of the silencer sound absorber (121) to an atomizing hole (301) of the spray nozzle (300) is taken as L, a relationship of L<2W is established.

3. The atomizer according to claims 1 or 2, wherein:
the spray nozzle (300) includes a first spray nozzle (300a) adapted to spray water into the central region of the high-speed zone of the airstream, and a second spray nozzle (300b) adapted to spray water into a peripheral region of the high-speed zone of the airstream.

4. The atomizer according to at least one of claims 1 to 3, wherein:
the spray nozzle (300) is disposed in plurality to spray droplets from a low-speed zone formed at rear of a silencer sound absorber (121), into adjacent high-speed zones, an independent feed water pipe (310a, 310b) being connected to each of the spray nozzles (300).

5. The atomizer according to at least one of claims 1 to 4, configured so that the amount of water to be sprayed increases stepwise for each of the spray nozzles (300).

6. The atomizer according to at least one of claims 1 to 5, wherein:
an ultrasonic atomizing element (320) of a blade form is placed alongside at an outlet side of a silencer sound absorber (121) such that the droplets are sprayed from a neighborhood of an interblade throat into the high-speed zone of the airstream.

7. The atomizer according to at least one of claims 1 to 6, wherein:
the spray nozzle (300) is a single-fluid nozzle constructed to spray high-temperature water of at least 100°C, under pressure.
